# EUROPEAN PATENT SPECIFICATION

(11) **EP 3 462 064 B1**
(45) Date of publication and mention of the grant of the patent: **10.11.2021**
(21) Application number: 18200358.2
(22) Date of filing: 20.09.2016
(51) Int. Cl.: F16K 1/36, F16K 1/42, F16K 47/02

(54) **FLOW CONTROL VALVE**
STROMREGELVENTIL
VANNE DE CONTRÔLE DE FLUX

(30) Priority: 17.11.2015 JP 2015224907
(43) Date of publication of application: 03.04.2019
(62) Divisional of application: 16189678.2
(73) Proprietor: Fujikoki Corporation, Tokyo 158-0082 (JP)
(72) Inventor: SUGANUMA, Takeshi, Tokyo, 158-0082 (JP); INO, Yasutoshi, Tokyo, 158-0082 (JP); OMORI, Eri, Ms., Tokyo, 158-0082 (JP)
(74) Representative: Kordel, Mattias

(56) References cited:
- EP-A1- 2 781 859
- JP-A- 2004 340 260
- JP-A- 2005 221 095
- JP-A- 2012 047 213
- JP-A- 2012 082 896
- JP-A- 2013 234 726

## Description

### Technical Field

The present invention relates to a flow control valve having a valve body, which includes a valve chamber and a valve orifice, and a valve element for changing the flow rate of a fluid through the valve orifice in accordance with the lift amount of the valve element. In particular, the present invention relates to a flow control valve that is suited to control the flow rate of a refrigerant in a heat pump heating and cooling system and the like.

### Background Art

A linear flow characteristic and an equal percentage flow characteristic are well known as the relationships between the valve opening position (i.e., lift amount) and the flow rate, that is, the flow characteristics of a flow control valve. The linear flow characteristic refers to a characteristic that the rate of change in the flow rate relative to a change in the valve opening position is constant, while the equal percentage flow characteristic refers to a characteristic that the rate of change in the valve opening position is proportional to the flow rate.

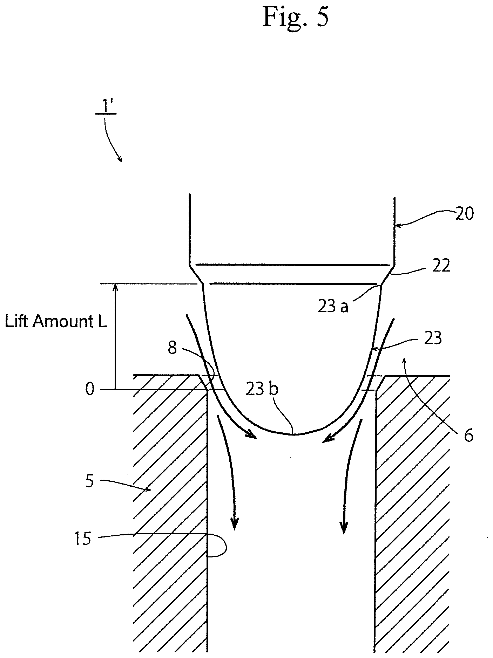

Fig. 5 shows the primary portion of an exemplary flow control valve that is adapted to obtain an equal percentage flow characteristic. A flow control valve 1' exemplarily shown in the drawing is used to control the flow rate of a refrigerant in a heat pump heating and cooling system and the like, and has a valve body 5, which includes a valve chamber 6, a valve seat 8 with an inverted truncated conical surface, and a valve orifice 15 with a cylindrical surface; and a valve element 20 for changing the flow rate of a fluid through the valve orifice 15 in accordance with the lift amount of the valve element 20 from the valve seat 8. The valve element 20 is adapted to move up or down so as to be in contact with or located away from the valve seat 8 by a screw-driving elevating or lowering mechanism that includes a valve stem provided with an external thread, a guide stem provided with an internal thread, a stepping motor, and the like as described in Patent Literature 1, for example.

The valve element 20 has a contact surface portion 22 to be in contact with the valve seat 8 and a curved surface portion 23 that is continuous with the lower side of the contact surface portion 22 and is ellipsoidal spherical in shape to obtain an equal percentage flow characteristic as the flow characteristic. The curved surface portion 23 has a shape similar to the lower half of an egg, and the outer periphery thereof is curved such that the degree of curve (i.e., curvature) gradually becomes greater from an upper end 23a toward a lower end 23b thereof.

In such a flow control valve 1' adapted to obtain an equal percentage flow characteristic, when the flow direction of a refrigerant is the valve chamber 6 → the valve orifice 15 as indicated by the thick solid arrows in FIG. 5, the refrigerant flows along the curved surface portion 23. However, when the refrigerant flows through the valve orifice 15, a sudden fluctuation in the pressure or a refrigerant separation phenomenon is likely to occur, whereby a vortex or cavitation is likely to occur and grow, which is problematic in that relatively large noise is generated.

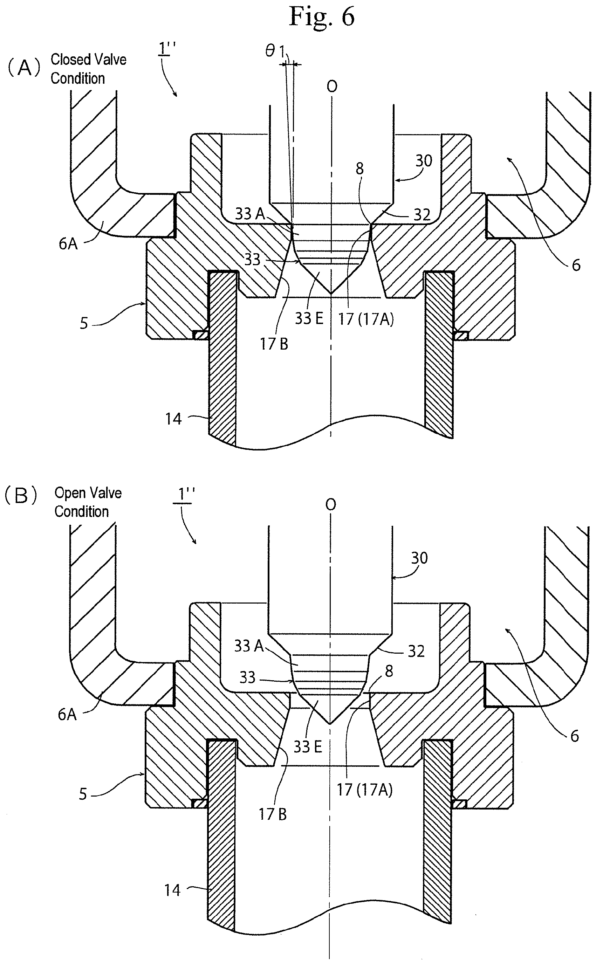

Providing the valve element 20 with the curved surface portion 23 that is ellipsoidal spherical in shape to obtain an equal percentage flow characteristic as described above is problematic in terms of the processing cost, cost-effectiveness, and the like. Thus, a flow control valve 1" that is adapted to obtain a characteristic close to an equal percentage flow characteristic, such as the one shown in Fig. 6, has been developed. The flow control valve 1" exemplarily shown in the drawing includes a valve body 5, which has a valve chamber forming member 6A fixedly attached thereto, a valve orifice 17 including a first valve orifice portion 17A with a short cylindrical surface and a second valve orifice portion 17B with a truncated conical surface, and a pipe joint 14 that is coupled to the outer periphery of the bottom portion of the second valve orifice portion 17B and to which a conducting pipe is connected; and a valve element 30 for changing the flow rate of a fluid through the valve orifice 17 in accordance with the lift amount of the valve element 30 from a valve seat 8.

The valve element 30 has a to-be-seated surface portion 32 to be seated on the valve seat 8, and a curved surface portion 33 that is continuous with the lower side of the to-be-seated surface portion 32 to obtain a characteristic close to an equal percentage flow characteristic as the flow characteristic. The curved surface portion 33 has conical tapered surface portions 33A to 33E with a plurality of steps (herein, five steps) such that its control angle (i.e., crossing angle with a line parallel with the central axial line O of the valve element 30) is increased in stages toward the tip end of the curved surface portion 33 so as to simulate an ellipsoidal spherical surface. The first control angle θ1 of the uppermost conical tapered surface portion 33A is usually set at 3° < θ1 < 15° (herein, 5°), and the lowermost conical tapered surface portion 33E has a conical surface with a pointed end.

Meanwhile, Patent Literature 2 discloses a flow control valve that is adapted to obtain a typical linear flow characteristic and has a valve orifice designed to have specific dimensions and shape so as to suppress the generation of noise due to fluctuations in the pressure, a refrigerant separation phenomenon, and the like that may occur while the refrigerant flows through the valve orifice as described above.

Further control valves are known from Patent Literature 3 and 4.

### Citation List

### Patent Literature

Patent Literature 1: JP 2012-172839 A
Patent Literature 2: JP 5696093 B
Patent Literature 3: EP2781859 A1
Patent Literature 4: JP2005221095 A

### Summary of Invention

### Technical Problem

However, in the flow control valve described in Patent Literature 2, as the length of the valve orifice should be set quite long, the pressure loss is increased, which is problematic in that an appropriate flow rate of a refrigerant is difficult to obtain. Further, as the dimensions and the shape of the valve orifice are designed to match a valve element with a linear flow characteristic, it is impossible to obtain a sufficient noise reducing effect when the flow control valve of Patent Literature 2 is applied to the aforementioned control valve with an equal percentage flow characteristic or a characteristic close thereto.

The present invention has been made in view of the foregoing, and it is an object of the present invention to provide a flow control valve that can effectively reduce the generation of noise due to fluctuations in the pressure or a refrigerant separation phenomenon that may occur while a refrigerant passes through a valve orifice, and also reduces the pressure loss and the like.

### Solution to Problem

In order to achieve the aforementioned object, a flow control valve in accordance with claim 1 is provided. The valve basically includes a valve body including a valve chamber and a valve orifice; and a valve element with a curved surface portion adapted to change the flow rate of a fluid through the valve orifice in accordance with the lift amount of the valve element, the curved surface portion having a curvature or a control angle that is increased continuously or in stages toward the tip end of the curved surface portion. The orifice diameter of the valve orifice is sequentially increased in three or more stages in a direction away from the valve chamber.

As a preferable configuration, the valve orifice includes, sequentially arranged from the side of the valve chamber, a first valve orifice portion with an orifice diameter D1, a second valve orifice portion with an orifice diameter D2, and a third valve orifice portion with an orifice diameter D3, and 1.08 < (D2/D1) < 1.37 and 1.08 < (D3/D2) <1.43.

As another preferable configuration, provided that the orifice diameter of a fourth valve orifice portion that is provided on the third valve orifice portion on the side opposite to the valve chamber or the inside diameter of a pipe joint that is coupled to the third valve orifice portion is D4, (D2/D1) < (D3/D2) < (D4/D3).

The flow control valve further includes a truncated conical tapered surface portion formed between each of the valve orifice portions.

As another preferable configuration, provided that the valve orifice length of the second valve orifice portion is L2, and the length of from one end of the second valve orifice portion to the other end of the third valve orifice portion is L4, 1.0 < (L2/D1) < 2.0 and 2.3 < (L4/D1) < 4.0.

The curved surface portion of the valve element is preferably designed to obtain an equal percentage flow characteristic or a characteristic close thereto as the flow characteristic.

The curved surface portion of the valve element preferably has one of an ellipsoidal spherical portion, conical tapered surface portions with a plurality of steps where a control angle is increased in stages toward the tip end of the curved surface portion, or a combination of an ellipsoidal spherical portion and one or more conical tapered surface portions.

### Advantageous Effects of Invention

In the flow control valve in accordance with the present invention, the orifice diameter of the valve orifice is sequentially increased in three or more stages from the valve chamber side toward the lower end side. Therefore, the pressure of a refrigerant is gradually restored as it passes through the valve orifice, and thus, fluctuations in the pressure are suppressed and rectification is achieved. In addition, as each of (D2/D1) and (D3/D2) is set within a specific range, it is possible to surely suppress the generation and growth of a vortex or cavitation that may occur due to fluctuations in the pressure or a refrigerant separation phenomenon. Further, as (D2/D1) < (D3/D2) < (D4/D3), the flow can be made smoother. Therefore, the noise level can be significantly reduced in the flow control valve with an equal percentage flow characteristic or a characteristic close thereto, for example.

Further, as each of (L2/D1) and (L4/D1) is set within a specific range, the valve orifice length L2 can be shorter than that of the flow control valve described in Patent Literature 2 or the flow control valve 1' with an equal percent flow characteristic shown in Fig. 5. Therefore, the pressure loss can be reduced and an appropriate flow rate of a refrigerant can be obtained.

### Brief Description of Drawings

Fig. 1 is a primary portion sectional view showing the primary portion in an embodiment of a flow control valve in accordance with the present invention.
Fig. 2(A) is a list showing the actual measured value data on test valves Nos. 1 to 4 with partially changed specifications and dimensions, and Fig. 2(B) is a list showing test conditions A to G to confirm and verify the operational effects of the present invention.
Fig. 3(A) is a graph showing the actual measured values of the test valves Nos. 1 to 4 for each of the test conditions A to G where the abscissa axis indicates the orifice diameter ratio D2/D1 and the ordinate axis indicates the noise level [dB], and FIG. 3(B) is a graph showing the actual measured values of the test valves Nos. 1 to 4 for each of the test conditions A to G where the abscissa axis indicates the orifice diameter ratio D3/D2 and the ordinate axis indicates the noise level [dB].
Fig. 4(A) is a list showing the actual measured value data on test valves Nos. 5 to 8 with partially changed specifications and dimensions, Fig. 4(B) is a list showing test conditions H and I, and Fig. 4(C) is a graph showing the actual measured values of the test valves Nos. 5 to 8 for each of the test conditions H and I where the abscissa axis indicates the orifice length/diameter ratio L4/D1 and the ordinate axis indicates the sound pressure level [dB] to confirm and verify the operational effects of the present invention.
Fig. 5 is a partial sectional view showing the primary portion of an exemplary flow control valve that is adapted to obtain an equal percentage flow characteristic.
Figs. 6 each show the primary portion of an exemplary flow control valve that is adapted to obtain a characteristic close to an equal percentage flow characteristic; specifically, Fig. 6(A) is a partial sectional view when the valve is closed and Fig. 6(B) is a partial sectional view when the valve is open.

### Description of Embodiments

Hereinafter, embodiments of the present invention will be described with reference to the accompanying drawings.

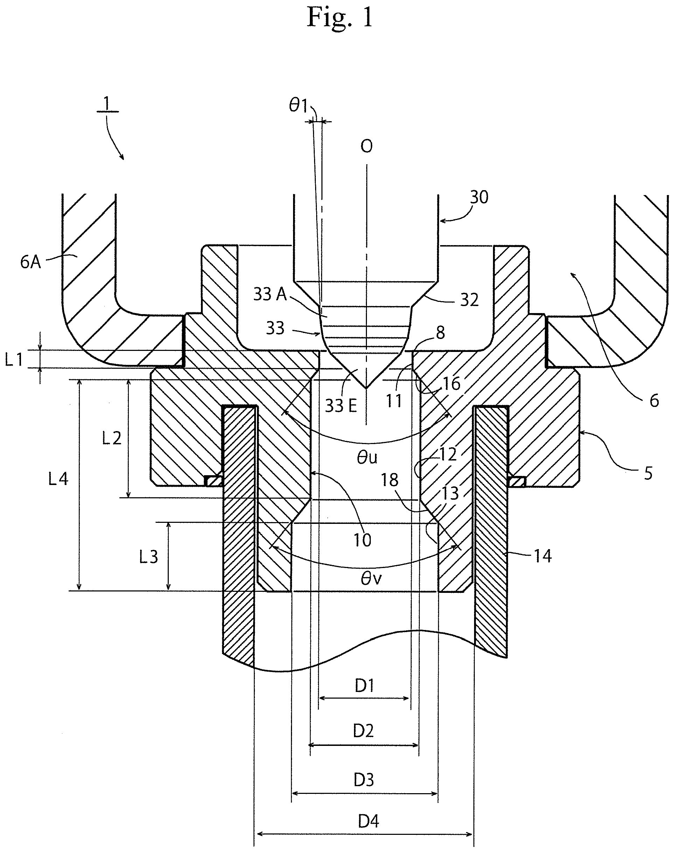

Fig. 1 is a primary portion sectional view showing the primary portion in an embodiment of a flow control valve in accordance with the present invention. It should be noted that in Fig. 1, portions that correspond to those of the aforementioned conventional flow control valve 1" shown in Fig. 6 are denoted by the same reference numerals.

The flow control valve 1 shown in the embodiment is adapted to obtain a characteristic close to an equal percentage flow characteristic like the aforementioned conventional flow control valve 1" shown in Fig. 6, and includes a valve body 5, which has a valve chamber forming member 6A fixedly attached thereto and a valve orifice 10 (described in detail below) that is the characteristic portion of the present invention; and a valve element 30 for changing the flow rate of a fluid through the valve orifice 10 in accordance with the lift amount of the valve element 30 from a valve seat 8. The valve element 30 includes, like the conventional flow control valve 1" shown in Fig. 6, a to-be-seated surface portion 32 to be seated on the valve seat 8, and a curved surface portion 33 that is continuous with the lower side of the to-be-seated surface portion 32 and adapted to obtain a characteristic close to an equal percentage flow characteristic as the flow characteristic. The curved surface portion 33 has conical tapered surface portions 33A to 33E with a plurality of steps (herein, five steps) such that its control angle (i.e., crossing angle with a line parallel with the central axial line O of the valve element 30) is increased in stages toward the tip end of the curved surface portion 33 so as to simulate an ellipsoidal spherical surface. The first control angle θ1 of the uppermost conical tapered surface portion 33A is set at 3° < θ1 < 15° (herein, 5°), and the lowermost conical tapered surface portion 33E has a conical surface with a pointed end.

The valve orifice 10 that opens into the valve chamber 6 includes, sequentially arranged from the valve chamber 6 side, a first valve orifice portion 11 that is cylindrical in shape and has an orifice diameter D1, a second valve orifice portion 12 that is cylindrical in shape and has an orifice diameter D2, and a third valve orifice portion 13 that is cylindrical in shape and has an orifice diameter D3. A pipe joint 14 with an inside diameter D4 to which a conducting pipe is to be connected is coupled to the outer periphery of the bottom portion of the third valve orifice portion 13. Herein, D1 < D2 < D3 < D4, which means that the orifice diameter of the valve orifice 10 is sequentially increased in three stages in a direction away from the valve chamber 6.

In this embodiment, (the orifice diameter ratio: D2/D1) < (the orifice diameter ratio: D3/D2) < (the orifice diameter ratio: D4/D3). Each of (D2/D1) and (D3/D2) is set within a specific range, that is, 1.08 < (D2/D1) < 1.37 and 1.05 < (D3/D2) < 1.43 on the basis of the experimental production and the like.

A truncated conical tapered surface portion 16 with a taper angle θu is formed between the first valve orifice portion 11 and the second valve orifice portion 12 (or at a step portion therebetween), and a truncated conical tapered surface portion 18 with a taper angle θv is formed between the second valve orifice portion 12 and the third valve orifice portion 13 (or at a step portion therebetween).

Further, provided that the valve orifice length (i.e., the length in the direction of the central axial line O) of the first valve orifice portion 11 is L1, the valve orifice length of the second valve orifice portion 12 is L2, the valve orifice length of the third valve orifice portion 13 is L3, and the length of from the upper end of the second valve orifice portion 12 to the lower end of the third valve orifice portion 13 is L4, each of (the valve orifice length/diameter ratio: L2/D1) and (the valve orifice length/diameter ratio: L4/D1) is set within a specific range, that is, 1.0 < (L2/D1) < 2.0 and 2.3 < (L4/D1) < 4.0 on the basis of the experimental production and the like.

In the flow control valve in accordance with the present invention with the aforementioned configuration, as the orifice diameter of the valve orifice 10 is sequentially increased in three stages in a direction away from the valve chamber 6, the pressure of a refrigerant is gradually restored as it passes through the valve orifice, and thus, fluctuations in the pressure are suppressed and rectification is achieved. In addition, as each of (D2/D1) and (D3/D2) is set within a specific range, it is possible to surely suppress the generation and growth of a vortex or cavitation that may occur due to fluctuations in the pressure or a refrigerant separation phenomenon. Further, as (D2/D1) < (D3/D2) < (D4/D3), the flow can be made smoother. Therefore, the noise level can be significantly reduced in the flow control valve with an equal percentage flow characteristic or a characteristic close thereto.

Further, as each of (L2/D1) and (L4/D1) is set within a specific range, L2 (or LI) can be shorter than that of the flow control valve described in Patent Literature 2 or the flow control valve 1' with an equal percent flow characteristic shown in Fig. 5. Therefore, the pressure loss can be reduced and an appropriate flow rate of a refrigerant can be obtained.

### [Verification tests for verifying the appropriate ranges of the orifice diameter ratio and the orifice length/diameter ratio, and the results thereof]

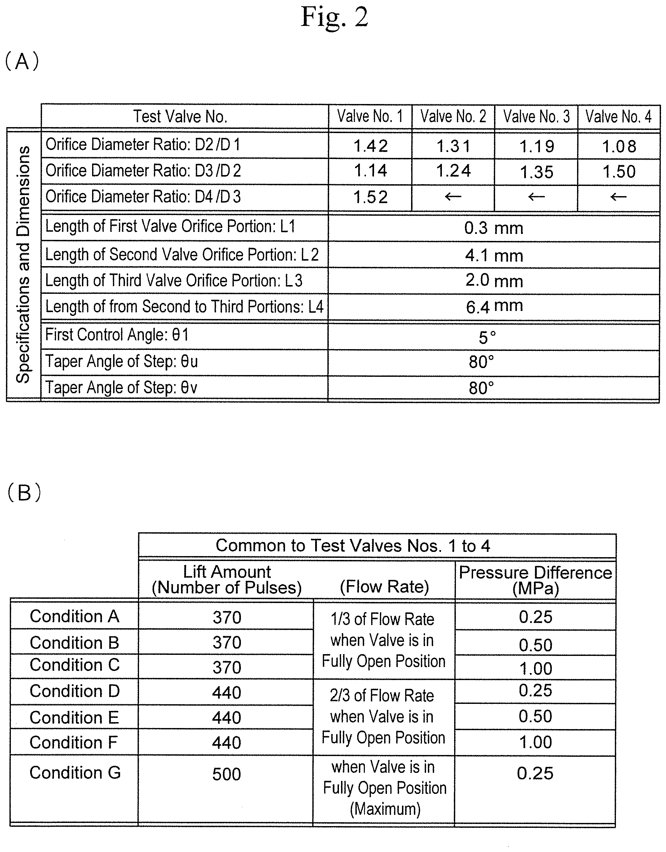

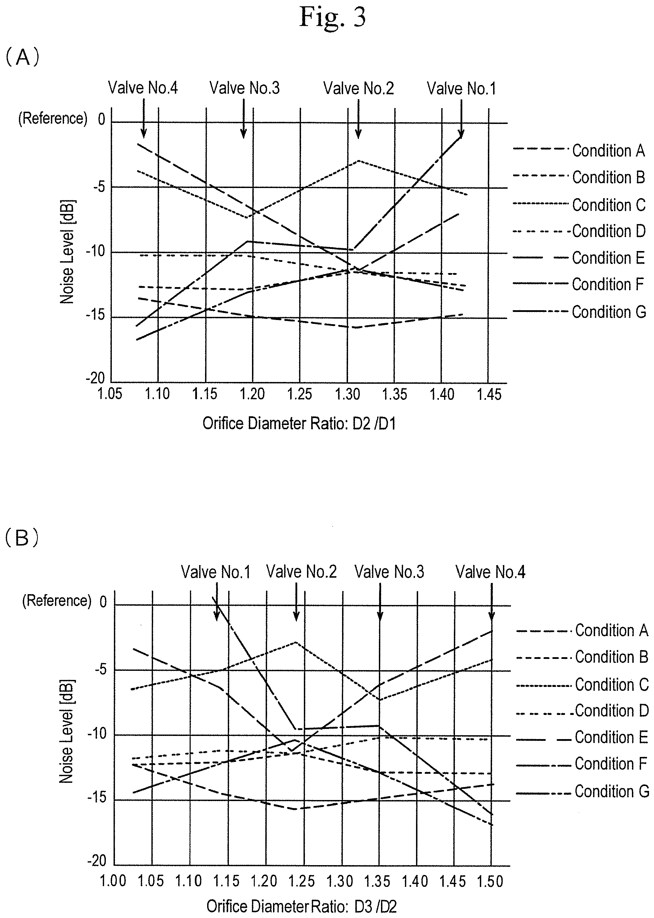

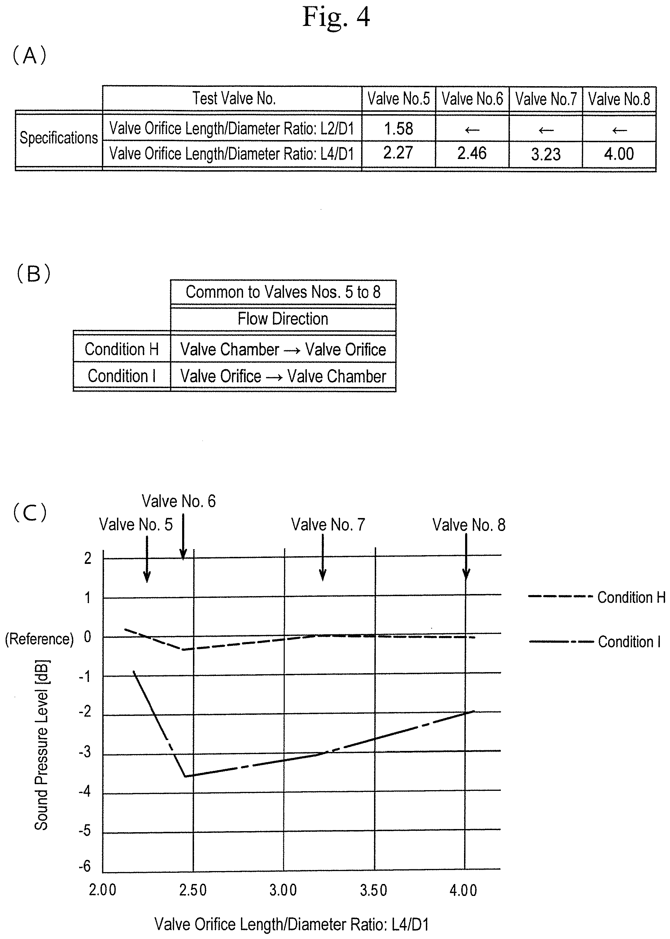

In order to confirm and verify the aforementioned operational effects, the inventors prepared test valves Nos. 1 to 4 with partially changed specifications and dimensions for verifying the orifice diameter ratios «(D2/D1) and (D3/D2)» and test valves Nos. 5 to 8 with partially changed specifications and dimensions for verifying the orifice length/diameter ratio <<(L4/D1)>> as shown in the lists of Figs. 2(A) and 4(B), and conducted verification tests under conditions A to G shown in Fig. 2(B) and conditions H and I shown in Fig. 4(B). Figs. 3(A) and 3(B) show the test results of the test valves Nos. 1 to 4 for verifying the orifice diameter ratios <<(D2/D1) and (D3/D2)>> and Fig. 4(C) shows the test results of the test valves Nos. 5 to 8 for verifying the orifice length/diameter ratio <<(L4/D1)>>.

It should be noted that Fig. 3(A) is a graph showing the actual measured values of the test valves Nos. 1 to 4 for each of the test conditions A to G where the abscissa axis indicates the orifice diameter ratio D2/D1 and the ordinate axis indicates the noise level [dB], and FIG. 3(B) is a graph showing the actual measured values of the test valves Nos. 1 to 4 for each of the test conditions A to G where the abscissa axis indicates the orifice diameter ratio D3/D2 and the ordinate axis indicates the noise level [dB]. Fig. 4(C) is a graph showing the actual measured values of the test valves Nos. 5 to 8 for each of the test conditions H and I where the abscissa axis indicates the orifice length/diameter ratio L4/D1 and the ordinate axis indicates the sound pressure level [dB].

In the graphs shown in Figs. 3(A), 3(B), and 4(C), the level zero (i.e., reference) indicates the noise level and the sound pressure level of the aforementioned conventional flow control valve 1" (hereinafter referred to as a conventional product) with a characteristic close to an equal percentage flow characteristic shown in Fig. 6.

The graph in Fig. 3(A) can confirm that at an orifice diameter ratio (D2/D1) of 1.05 to 1.45 (i.e., approximately the entire range shown in Fig. 3(A)), the noise level is lower than that of the conventional product, and, in particular, the noise reducing effects of the valve No. 3 and the valve No. 2, for example, are high; however, as long as (D2/D1) is within the range of 1.08 (the orifice diameter ratio of the valve No. 4) to 1.37 (≈(1.31+1.42)/2 that is approximately an intermediate value between the orifice diameter ratios of the valve No. 2 and the valve No. 1), noise can be significantly reduced than that of the conventional product.

In addition, the graph in Fig. 3B can confirm that at an orifice diameter ratio (D3/D2) of 1.00 to 1.50 (i.e., approximately the entire range shown in Fig. 3(B)), the noise level is lower than that of the conventional product, and, in particular, the noise reducing effects of the valve No. 3 and the valve No. 2, for example, are high; however, as long as (D3/D2) is within the range of 1.08 to 1.43 (≈(1.35+1.50)/2 that is approximately an intermediate value between the orifice diameter ratios of the valve No. 3 and the valve No.4), noise can be significantly reduced than that of the conventional product.

The graph in Fig. 4(C) can confirm that at an orifice length/diameter ratio (L4/D1) of 2.00 to 4.00 (i.e., approximately the entire range shown in Fig. 4(C)), the sound pressure level is equal to or lower than that of the conventional product, and, in particular, the noise reducing effect of the valve No. 6, for example, is high; however, as long as (L4/D1) is within the range of 2.30 (which is higher than the orifice length/diameter ratio of the valve No. 5) to 4.00 (which is the orifice length/diameter ratio of the valve No. 8), a noise reducing effect higher than that of the conventional product can be obtained (for example, the sound pressure level can be lower than the reference by 2 dB or more under the condition I).

Though not shown, it has been also confirmed that as long as the orifice length/diameter ratio (L2/D1) is in the range of 1.0 to 2.0, the sound pressure level can be equal to or lower than that of the conventional product, and thus that a noise reducing effect higher than that of the conventional product can be obtained.

Although the aforementioned embodiment illustrates a case where the present invention is applied to the flow control valve 1 with a characteristic close to an equal percentage flow characteristic, the present invention is not limited thereto, and can also be applied to the flow control valve 1' with an equal percentage flow characteristic such as the one shown in Fig. 5 as well as the flow control valve with a linear flow characteristic described in Patent Literature 1, 2, or the like.

In addition, although the curved surface portion of the valve element in the aforementioned embodiment has conical tapered surface portions with a plurality of steps where the control angle is increased in stages toward the tip end of the curved surface portion, the present invention is not limited thereto, and it is also possible to provide an ellipsoidal spherical surface portion such as the one shown in Fig. 5 or a configuration in which the lower end portion of the ellipsoidal spherical surface portion (i.e., ellipsoidal spherical crown portion) is removed. Further, the curved surface portion may also be formed by a combination of an ellipsoidal spherical surface portion and one or more conical tapered surface portions and the like.

Although the aforementioned embodiment illustrates a configuration in which the pipe joint 14 with an inside diameter D4 is coupled to the third valve orifice portion 13, it is needless to mention that operational effects similar to those described above can also be obtained even when a fourth valve orifice portion with an orifice diameter D4 is formed on the third valve orifice portion 13 on the side opposite to the valve chamber.

### Reference Signs List

- 1: Flow control valve
- 5: Valve body
- 6: Valve chamber
- 10: Valve orifice
- 11: First valve orifice portion
- 12: Second valve orifice portion
- 13: Third valve orifice portion
- 14: Pipe joint
- 30: Valve element
- 33: Curved surface portion
- D1: Diameter of first valve orifice portion
- D2: Diameter of second valve orifice portion
- D3: Diameter of third valve orifice portion
- D4: Inside diameter of pipe joint
- L1: Valve orifice length of first valve orifice portion
- L2: Valve orifice length of second valve orifice portion
- L3: Valve orifice length of third valve orifice portion
- L4: Length of from second to third valve orifice portions

## Claims

1. A flow control valve (1) comprising:
a valve body (5) including a valve chamber (6) and a valve orifice (10); and
a valve element (30) including a curved surface portion (33) adapted to change a flow rate of a refrigerant through the valve orifice (10) in accordance with a lift amount of the valve element (30) and a to-be-seated surface portion (32) to be seated on a valve seat (8) of the valve orifice (10), the to-be-seated surface portion being continuous with the curved surface portion (33), the curved surface portion (33) having a curvature or a control angle that is increased continuously or in stages toward a tip end of the curved surface portion (33), **characterized in that**
an orifice diameter of the valve orifice (10) is sequentially increased in three or more stages in a direction away from the valve chamber (6), wherein
the valve orifice (10) includes, sequentially arranged from a side of the valve chamber (6), a first cylindrical valve orifice portion (11) with an orifice diameter D1, a second cylindrical valve orifice portion (12) with an orifice diameter D2, and a third cylindrical valve orifice portion (13) with an orifice diameter D3, and D1 < D2 < D3, wherein
a truncated conical tapered surface portion (16,18) is formed between the first cylindrical valve orifice portion (11) and the second cylindrical valve orifice portion (12), and between the second cylindrical valve orifice portion (12) and the third cylindrical valve orifice portion (13).

2. The flow control valve (1) according to claim 1, wherein
1.08 < (D2/D1) < 1.37 and 1.08 < (D3/D2) <1.43.

3. The flow control valve (1) according to claim 2, wherein provided that an orifice diameter of a fourth valve orifice portion that is provided on the third valve orifice portion (13) on a side opposite to the valve chamber (6) or an inside diameter of a pipe joint (14) that is coupled to the third valve orifice portion (13) is D4, (D2/D1) < (D3/D2) < (D4/D3).

4. The flow control valve (1) according to any one of claims 2 to 3, wherein provided that a valve orifice length of the second valve orifice portion (12) is L2, and a length of from one end of the second valve orifice portion (12) to the other end of the third valve orifice portion (13) is L4, 1.0 < (L2/D1) < 2.0 and 2.3 < (L4/D1) < 4.0.

5. The flow control valve (1) according to any one of claims 1 to 4, wherein the curved surface portion (33) of the valve element (30) is designed to obtain an equal percentage flow characteristic or a characteristic close thereto as a flow characteristic.

6. The flow control valve (1) according to claim 5, wherein the curved surface portion (33) of the valve element (30) has one of an ellipsoidal spherical portion, conical tapered surface portions (33A,33E) with a plurality of steps where a control angle is increased in stages toward the tip end of the curved surface portion (33), or a combination of an ellipsoidal spherical portion and one or more conical tapered surface portions (33A,33E).

## Patentansprüche

1. Durchflussregelventil (1), das umfasst:
einen Ventilkörper (5), der eine Ventilkammer (6) und eine Ventilöffnung (10) enthält; und
ein Ventilelement (30), das einen gekrümmten Oberflächenabschnitt (33) enthält, der dafür ausgelegt ist, eine Durchflussmenge eines Kühlmittels durch die Ventilöffnung (10) in Übereinstimmung mit einer Hubhöhe des Ventilelements (30) und eines aufzusetzenden Oberflächenabschnitts (32), der auf einen Ventilsitz (8) der Ventilöffnung (10) aufzusetzen ist, zu ändern, wobei der aufzusetzende Oberflächenabschnitt stetig mit dem gekrümmten Oberflächenabschnitt (33) verbunden ist, wobei der gekrümmte Oberflächenabschnitt (33) eine Krümmung oder einen Steuerwinkel aufweist, die bzw. der sich in Richtung eines vorderen Endes des gekrümmten Oberflächenabschnitts (33) kontinuierlich oder in Stufen erhöht, **dadurch gekennzeichnet, dass**
ein Öffnungsdurchmesser der Ventilöffnung (10) sich in einer Richtung von dem Ventilelement (6) weg in drei oder mehr Stufen aufeinanderfolgend erhöht, wobei
die Ventilöffnung (10) aufeinanderfolgend angeordnet von einer Seite der Ventilkammer (6) einen ersten zylindrischen Ventilöffnungsabschnitt (11) mit einem Öffnungsdurchmesser D1, einen zweiten zylindrischen Ventilöffnungsabschnitt (12) mit einem Öffnungsdurchmesser D2 und einen dritten zylindrischen Ventilöffnungsabschnitt (13) mit einem Öffnungsdurchmesser D3 enthält, und wobei D1 < D2 < D3 ist, wobei
zwischen dem ersten zylinderförmigen Ventilöffnungsabschnitt (11) und dem zweiten zylinderförmigen Ventilöffnungsabschnitt (12) und zwischen dem zweiten zylinderförmigen Ventilöffnungsabschnitt (12) und dem dritten zylinderförmigen Ventilöffnungsabschnitt (13) ein kegelstumpfförmig verjüngter Oberflächenabschnitt (16, 18) gebildet ist.

2. Durchflussregelventil (1) nach Anspruch 1, wobei
1,08 < (D2/D1) < 1,37 und 1,08 < (D3/D2) < 1,43 ist.

3. Durchflussregelventil (1) nach Anspruch 2, wobei, wenn ein Öffnungsdurchmesser eines vierten Ventilöffnungsabschnitts, der an dem dritten Ventilöffnungsabschnitt (13) auf einer Seite, die der Ventilkammer (6) gegenüberliegt, vorgesehen ist, oder ein Innendurchmesser einer Rohrverbindung (14), die mit dem dritten Ventilöffnungsabschnitt (13) gekoppelt ist, D4 ist,
(D2/D1) < (D3/D2) < (D4/D3) ist.

4. Durchflussregelventil (1) nach einem der Ansprüche 2 bis 3, wobei, wenn eine Ventilöffnungslänge des zweiten Ventilöffnungsabschnitts (12) L2 ist und eine Länge von einem Ende des zweiten Ventilöffnungsabschnitts (12) zu dem anderen Ende des dritten Ventilöffnungsabschnitts (13) L4 ist, 1,0 < (L2/D1) < 2,0 und
2,3 < (L4/D1) < 4,0 ist.

5. Durchflussregelventil (1) nach einem der Ansprüche 1 bis 4, wobei der gekrümmte Oberflächenabschnitt (33) des Ventilelements (30) dafür ausgelegt ist, als eine Strömungscharakteristik eine gleichprozentige Strömungscharakteristik oder eine Charakteristik nahe dazu zu erhalten.

6. Durchflussregelventil (1) nach Anspruch 5, wobei der gekrümmte Oberflächenabschnitt (33) des Ventilelements (30) einen ellipsoidisch-kugelförmigen Abschnitt oder kegelförmig verjüngte Oberflächenabschnitte (33A, 33E) mit einer Vielzahl von Stufen, wobei ein Steuerwinkel sich in Richtung des vorderen Endes des gekrümmten Oberflächenabschnitts (33) in Stufen erhöht, oder eine Kombination eines ellipsoidisch-kugelförmigen Abschnitts und eines oder mehrerer kegelförmig verjüngter Oberflächenabschnitte (33A, 33E) aufweist.

## Revendications

1. Une valve de régulation de débit (1) comprenant :
un corps de valve (5) comportant une chambre de valve (6) et un orifice de valve (10) ; et
un élément de valve (30) comportant une partie présentant une surface incurvée (33), adaptée pour modifier le débit d'un réfrigérant par l'orifice de valve (10) conformément à une levée de l'élément de valve (30), et une partie présentant une surface à poser (32), à poser sur un siège de valve (8) de l'orifice de valve (10), la partie présentant une surface à poser (32) étant en continuité avec la partie présentant une surface incurvée (33), la partie présentant une surface incurvée (33) ayant une courbure ou un angle de contrôle qui augmente en continu ou en étapes vers une extrémité de la partie présentant une surface incurvée (33), **caractérisée en ce que**
un diamètre de l'orifice de valve (10) augmente séquentiellement en trois étapes ou plus dans une direction éloignée de la chambre de valve (6),
l'orifice de valve (10) comporte, dans une disposition séquentielle depuis un côté de la chambre de valve (6), une première partie cylindrique de l'orifice de valve (11) avec un diamètre d'orifice D1, une deuxième partie cylindrique de l'orifice de valve (12) avec un diamètre d'orifice D2, et une troisième partie cylindrique de l'orifice de valve (13) avec un diamètre d'orifice D3, et D1 < D2 < D3,
une partie présentant une surface effilée conique tronquée (16,18) étant formée entre la première partie cylindrique de l'orifice de valve (11) et la deuxième partie cylindrique de l'orifice de valve (12), et entre la deuxième partie cylindrique de l'orifice de valve (12) et la troisième partie cylindrique de l'orifice de valve (13).

2. La valve de régulation de débit (1) selon la revendication 1, considérant que 1.08 < (D2/D1) < 1.37 et 1.08 < (D3/D2) < 1.43.

3. La valve de régulation de débit (1) selon la revendication 2, considérant que, sous réserve qu'un diamètre d'orifice d'une quatrième partie de l'orifice de valve qui est prévue sur la troisième partie de l'orifice de valve (13) sur un côté opposé à la chambre de valve (6) ou qu'un diamètre intérieur d'une jonction de tuyau (14) qui est couplée à la troisième partie de l'orifice de valve (13) soit D4, (D2/D1) < (D3/D2) < (D4/D3).

4. La valve de régulation de débit (1) selon l'une des revendications 2 à 3, considérant que, sous réserve qu'une longueur de l'orifice de valve de la deuxième partie de l'orifice de valve (12) soit L2, et une longueur d'une extrémité de la deuxième partie de l'orifice de valve (12) à l'autre extrémité de la troisième partie de l'orifice de valve (13) soit L4, 1.0 < (L2/D1) < 2.0 et 2.3 < (L4/D1) < 4.0.

5. La valve de régulation de débit (1) selon l'une des revendications 1 à 4, considérant que la partie présentant une surface incurvée (33) de l'élément de valve (30) est conçue pour obtenir une caractéristique de débit de pourcentage égal ou une caractéristique proche en tant que caractéristique de débit.

6. La valve de régulation de débit (1) selon la revendication 5, considérant que la partie présentant une surface incurvée (33) de l'élément de valve (30) possède l'une d'une partie sphérique ellipsoïdale, des parties présentant une surface effilée conique (33A,33E) avec une pluralité d'étapes où un angle de contrôle augmente en étapes vers l'extrémité de la partie présentant une surface incurvée (33), ou une combinaison d'une partie sphérique ellipsoïdale et d'une ou plusieurs parties présentant une surface effilée conique (33A,33E).
